# EUROPEAN PATENT SPECIFICATION

(11) **EP 3 102 840 B1**
(45) Date of publication and mention of the grant of the patent: **03.04.2019**
(21) Application number: 15708329.6
(22) Date of filing: 03.02.2015
(51) Int. Cl.: F16B 5/06, F16B 21/20, F16B 21/16

(54) **QUICK CONNECTION AND/OR FASTENING SYSTEM**
SCHNELLVERBINDUNGS- UND/ODER BEFESTIGUNGSSYSTEM
SYSTÈME DE RACCORDEMENT ET/OU DE FIXATION RAPIDE

(30) Priority: 07.02.2014 IT VI20140037
(43) Date of publication of application: 14.12.2016
(73) Proprietor: MGT Industries S.R.L., 36015 Schio (VI) (IT); Brun, Giancarlo, 36016 Thiene (VI) (IT)
(72) Inventor: BRUN, Giancarlo, I-36016 Thiene (VI) (IT)
(74) Representative: Ziliotto, Tiziano
(86) International application number: PCT/IB2015/050809
(87) International publication number: WO 2015/118441

(56) References cited:
- WO-A1-84/01847
- WO-A1-2013/144675
- GB-A- 2 297 793

## Description

### TECHNICAL FIELD OF THE INVENTION

The present invention concerns the field of quick connection and/or fastening systems suited to alternatively allow the connection and the disconnection of two elements. In particular, the present invention concerns the technical field of quick connection and/or fastening systems suited to alternatively allow the connection and the disconnection of two elements like, for example, the upright or the bearing structure and a shelf of a shelving system, as well as a frame, for example of a vehicle, a door, a window, a fridge, a refrigerated cabinet for supermarkets, a piece of furniture or any furnishing element, and a door leaf of the same.

### PRIOR ART

Connection and/or coupling systems, through which two components are mutually connected to each other, are known in the art. Examples of connection systems can be found in WO2013144675A1 (VI 2012A000071), GB 2297793A, US 3896698A and CH 600738A5. For example, in the case of the manufacture of shelving systems and/or similar structures, systems are known that make it possible to fix the shelves to the bearing structure of the shelving system, as well as to remove a shelf from the shelving system itself. The most common systems comprise small metal parts, for example screws and dowels and elements with predefined shape and size suited to be fixed to the bearing structure and to the various shelves by means of screws and/or dowels. Therefore, for example, the assembly of a shelving system requires that the shelving system is provided in advance with those coupling or fastening elements that during the actual assembly operations will be coupled with those coupling and/or fastening elements which were previously fixed to the shelves.

While it is possible to appreciate the advantages offered by the most recent solutions, it should however be noted that said solutions are not without drawbacks. In particular, among the typical drawbacks it should be mentioned that the coupling systems of known type, in particular the actual coupling means, do not offer the necessary reliability and the necessary guarantees against any accidental disconnection or uncoupling, so that there is the risk that during use of the finished structure this may be accidentally separated from the bearing structure, with serious risks for the user and consequent loss of stability of the structure itself. As regards, then, the quick connection and/or fastening systems for door leaves and/or window panels (for homes, cars, caravans and vehicles in general), and/or also for door panels of home furniture or other types of furniture, like, for example, shelving systems, chests of drawers, wardrobes, etc., also in this case it should be noted that several different solutions were proposed in the recent past. However, very often said solution were proposed in order to meet different needs, in such a way as to privilege the needs for functionality and reliability in some cases, the needs related to aesthetic appearance and size in other cases, or the needs related to ease of assembly and installation in further cases. Therefore, none of the known solutions really meets all the needs just mentioned above. For example, the solutions that usually offer suitable guarantees from the point of view of functionality (which cause them to be appreciated and preferred for use in the case of doors and windows for homes in general) are often characterized by considerable overall dimensions that make them unsuitable for special applications like, for example, pieces of furniture or cabinets, especially for motor homes, or in any case intended to be used in small spaces. In the same way, the known solutions that are most suited to be used for different purposes, for example in the case of cabinets, are often characterized by a simple construction structure that reduces their overall dimensions and simplifies their assembly and use, but often goes to the detriment of reliability and functionality.

It is thus one object of the present invention to overcome the drawbacks mentioned above.

In particular, it is the object of the present invention to provide a small-sized quick connection and/or fastening system that can be applied also in small spaces and that at the same time is reliable. Furthermore, it is the object of the present invention to provide a connection system that is economic, easy to produce and to install and capable of satisfying the modern aesthetic needs.

Further examples of connection systems are known from document WO 84/01847.

### SUMMARY OF THE INVENTION

The above-mentioned problems are solved by the teaching of independent claim 1.

According to an embodiment of the present invention, the same provides a quick connection and/or fastening system suited to arrange a first element and a second element in a first configuration of connection and in a second configuration of disconnection; the system comprising a first component and a second component suited to be respectively mounted on the first and on the second element, the first and the second component being furthermore suited to be arranged in a first configuration of connection and in a second configuration of disconnection, in such a way as to alternatively allow the mutual connection and disconnection of the first and the second element; the first component being suited to house a terminal portion of the second component in such a way as to allow its translation inside it; the system comprising rolling means, the first component comprising a first rolling surface for the rolling means and the terminal portion of the second component comprising a second rolling surface for the rolling means; the rolling means being suited to counteract the translation of the terminal portion of the second component towards the configuration of disconnection of the system and suited to be set rotating in a first direction of rotation by the translation of the terminal portion of the second component in order to reach the configuration of connection of the system, and suited to be set rotating in a second direction of rotation, contrary to the first direction of rotation, by the translation of the terminal portion of the second component in order to reach the configuration of disconnection of the system; the system being such that the second rolling surface is configured in such a way that, in the connection configuration, the distance between the second rolling surface and the first rolling surface increases along the direction of translation of the terminal portion that leads to the configuration of disconnection of the system. In this way, it is possible to obtain a stable and safe connection between two elements to be connected. Furthermore, according to the present embodiment of the invention, the connection and/or fastening system is easy and economical to manufacture and can be suited to connect elements with reduced sizes and/or elements requiring the connection system to occupy a small space.

According to a further embodiment of the present invention, the same provides a system that is such that the second rolling surface is inclined with respect to the direction of translation of the terminal portion inside the first component. Furthermore, also the first rolling surface can be inclined with respect to the direction of translation of the terminal portion inside the first component. In this way, the rolling means can, in a simple manner, counteract the translation of the terminal portion of the second component towards the configuration of disconnection of the system, thus making the system safe and reliable and at the same time economical and easy to produce.

According to a further embodiment of the present invention, the same provides a system that is such that the rolling means comprise a metallic, ferromagnetic or paramagnetic material.

According to a further embodiment of the present invention, the same provides a system that is such as to comprise holding means suited to exert an attraction force on the rolling means. In this way, the rolling means are facilitated in counteracting the translation of the terminal portion of the second component towards the configuration of disconnection of the system.

According to a further embodiment of the present invention, the same provides a system that is such that the holding means support the rolling means in the configuration of disconnection of the system.

According to a further embodiment of the present invention, the same provides a system that is such that the holding means comprise one or more magnetic elements.

According to a further embodiment of the present invention, the same provides a system that is such that the second component comprises the rolling means.

According to a further embodiment of the present invention, the same provides a system that is such that the rolling means comprise one or more balls, one or more cylinders or similar elements.

According to a further embodiment of the present invention, the same provides a system that is such that the first rolling surface of the first component comprises safety means suited to prevent the accidental disconnection of the system. In this way it is possible to make the connection between two elements to be connected safer and more reliable.

According to a further embodiment of the present invention, the same provides a system that is such that the safety means comprise a step on the first rolling surface. Such safety element is easy, quick and economical to make.

According to a further embodiment of the present invention, the same provides a system that is such that it furthermore comprises a release element suited to be used to bring the system from the connection configuration to the disconnection configuration.

According to a further embodiment of the present invention, the same provides a system that is such that the first component comprises one or more grooves suited to house an element suited to release the system, in such a way that by inserting the release element in the one or more grooves it is possible to bring the system from the connection configuration to the disconnection configuration. In this way the operations of release of the system are easy and quick.

According to a further embodiment of the present invention, the same provides a system that is such that the release element comprises elongated elements suited to be inserted in the grooves of the first component, in such a way as to thrust the rolling elements in the direction opposite the direction of translation of the terminal portion that leads to the configuration of connection of the system.

According to a further embodiment of the present invention, the same provides a door comprising a first element, for example a door leaf, a second element, for example a frame, and a quick connection and/or fastening system according to any of the embodiments of the present invention, **wherein** the first component is mounted on the first element and the second component is mounted on the second element.

According to a further embodiment of the present invention, the same provides a fridge comprising a door comprising a quick connection and/or fastening system according to any of the embodiments of the present invention.

### BRIEF DESCRIPTION OF THE DRAWINGS

The present invention will be described with reference to the attached drawings, in which the same reference numbers and/or signs indicate the same parts and/or similar and/or corresponding parts of the system.
Figure 1 schematically shows a connection and/or fastening system according to an embodiment of the present invention, in the configuration of disconnection and seen from above. A first component and a second component of the system are visible in the figure.
Figure 2 schematically shows a sectional view of the connection system shown in Figure 1, along the direction AA indicated in Figure 1.
Figure 3A schematically shows the connection system shown in Figure 2 during a step of the translation of the second component of the system towards the first component of the system, which leads to the configuration of connection of the same.
Figure 3B schematically shows the connection system shown in Figure 2 during a further step of the translation of the second component of the system towards the first component of the system, which leads to the configuration of connection of the same.
Figure 3C schematically shows the connection system shown in Figure 2 during a further step of the translation of the second component of the system towards the first component of the system, which leads to the configuration of connection of the same.
Figure 3D schematically shows the connection system shown in Figure 2 during a further step of the translation of the second component of the system towards the first component of the system, which leads to the configuration of connection of the same. A detail of the system is enlarged.
Figure 3E schematically shows the connection system shown in Figure 2, in the configuration of connection.
Figure 4A schematically shows a 3D view of the connection system according to a further embodiment of the present invention, in which a means for releasing the system is shown in non-operating condition.
Figure 4B schematically shows a 3D view of the connection system shown in Figure 4A during a step of use of the release means.
Figure 5A schematically shows a sectional view of the connection system shown in Figure 4A, along the direction BB indicated in Figure 4A, during a step of use of the release means.
Figure 5B schematically shows the connection system shown in Figure 5A, in a further step of use of the release means.
Figure 5C schematically shows the connection system shown in Figure 5A, in a further step of use of the release means.
Figure 6A schematically shows a connection system according to a further embodiment of the present invention, seen along the direction AA defined in Figure 1 and while it is being installed on an element to be connected.
Figure 6B schematically shows a 3D view of the connection system shown in Figure 6A.
Figure 7A schematically shows a connection system according to a further embodiment of the present invention, seen along the direction AA defined in Figure 1 and during a step of assembly on an element to be connected.
Figure 7B schematically shows the connection system shown in Figure 7A, mounted on both of the elements to be connected.

### DETAILED DESCRIPTION OF THE INVENTION

The present invention is described here below with reference to particular embodiments, as illustrated in the attached drawings. However, the present invention is not limited to the particular embodiments illustrated in the following detailed description and represented in the figures, rather, the embodiments described herein simply exemplify the various aspects of the present invention, the scope of which is defined in the claims. Further modifications and variants of the present invention will be clear to the expert in the art.

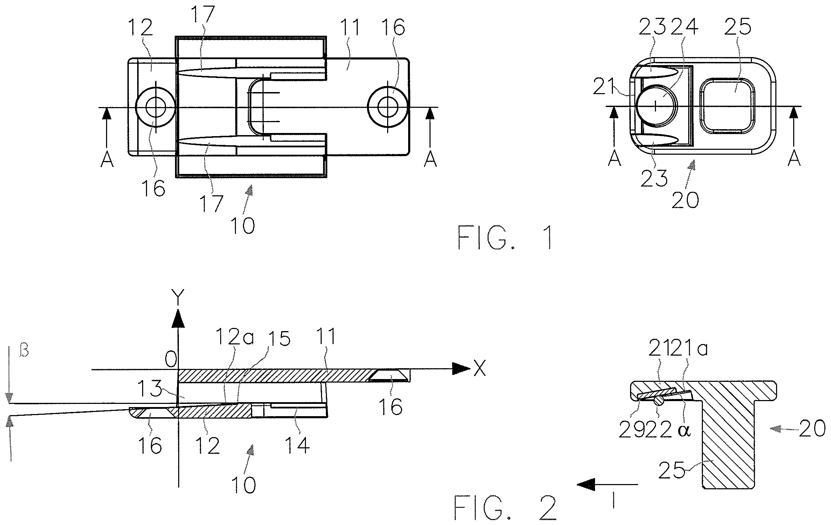

Figure 1 schematically shows a connection and/or fastening system according to an embodiment of the present invention, in the configuration of disconnection and seen from above.

The system comprises a first component 10 (left) and a second component 20 (right). The system is suited to arrange a first element P and a second element S in a first configuration of connection and in a second configuration of disconnection. The first element P and the second element S can respectively be, for example, the door leaf and the frame of a door, of a fridge, of a refrigerated cabinet for supermarkets, of a vehicle, of a wardrobe, or of any other furnishing element, or a shelf of a shelving system and the upright or the bearing structure of the same.

The first component 10 and the second component 20 are suited to be mounted respectively on the first element P and on the second element S. The first component 10 is fixed to the first element P and the second component is fixed to the second element S through the use of suitable fastening means, for example screws, nails, hooks, glue or similar means.

The first component 10 and the second component 20, furthermore, are suited to be brought in a first configuration of connection and in a second configuration of disconnection through a suitable translation, in such a way as to alternatively allow the mutual connection and disconnection of the first element P and of the second element S, on which they are respectively mounted. More particularly, the first component 10 comprises a cavity 13 suited to house a terminal portion 21 of the second component 20 in such a way as to allow it to translate inside it. In the figure, the system is shown in the configuration of disconnection.

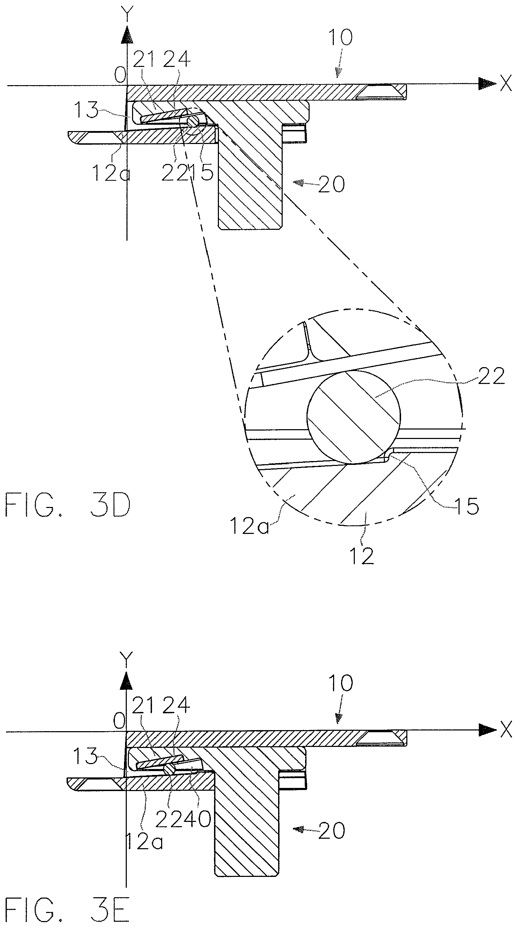

The system comprises rolling means 22, described in detail with reference to Figure 2. The first component 10 comprises a first rolling surface 12a for the rolling means 22 and the terminal portion 21 of the second component 20 comprises a second rolling surface 21a for the rolling means 22. The rolling means 22 are suited to counteract the translation of the terminal portion 21 of the second component 20 towards the configuration of disconnection of the system, as explained in detail with reference to Figure 3E. The rolling means are also suited to be set rotating in a first direction of rotation by the translation of the terminal portion 21 of the second component 20 in order to reach the configuration of connection of the system (see the description of Figures from 3A to 3D), and suited to be set rotating in a second direction of rotation, contrary to the first direction of rotation, by the translation of the terminal portion 21 of the second component 20 in order to reach the configuration of disconnection of the system (see the description of Figures from 6A to 6C). The system is such that the second rolling surface 21a is configured in such a way that, in the configuration of connection, the distance between the second rolling surface 21a and the first rolling surface 12a increases along the direction of translation of the terminal portion 21 which leads to the configuration of disconnection of the system.

The direction of translation and also the two components 10 and 20 of the system are defined and/or described in greater detail with reference to Figure 2.

Figure 2 schematically shows the connection system shown in Figure 1, in a sectional view along the direction AA indicated in Figure 1. The system comprises a first component 10 (left) and a second component 20 (right). The system shown in the figure is shown in the configuration of disconnection.

The first component 10, in the embodiment shown in the figure, comprises two walls 11 and 12 that define a cavity 13. The cavity 13 is suited to house a portion of the second component 20 and is suited to allow the sliding movement of the second component 20 inside the first component 10.

The surface of the wall 12 directed towards the inside of the cavity 13 defines a first rolling surface 12a. The first rolling surface 12a comprises a guide 14 that ensures a correct sliding movement of the second component inside the cavity 13, safety means 15 for the system, intended to avoid any accidental disconnection of the system, and grooves 17 suited to allow the system to be released through suitable release means 30 that are described in greater detail with reference to Figures from 3A to 4C. The guide 14, which is located at one of the two ends of the wall 12 of the first component of the system, more particularly, the end where the second component 20 of the system is inserted in the cavity 13, comprises a groove having a profile that is compatible with the rolling means 22, defined here below with reference to the second component 20 of the system. The safety means 15 of the system may comprise one or more steps, as shown in the enlarged view of Figure 3D.

In order to better understand how the system works, and more particularly the steps that lead from the configuration of disconnection to that of connection and vice versa, it is useful to define the direction and the sense of the translation of the components of the system, which leads to the two different configurations. For this purpose, it is necessary to define a bidimensional reference system, fixed with respect to the first component 10 of the system. More particularly, a reference system is considered that is defined by the orthogonal axes X and Y and by the centre O. The centre O of the reference system is situated on the wall 11 of the first component 10, on its surface opposite the cavity 13 in the point of the end of the wall 11 opposite the one where the second component of the system is inserted in the cavity 13. The X-axis is parallel to the first rolling surface 12a and the Y-axis is perpendicular to the X-axis. In this reference system, the direction of the translation that leads from the configuration of disconnection of the system to the configuration of connection is the direction of the second component 20 that moves parallel to the X-axis and towards the centre O of the reference system, meaning from right to left in the figure. The direction is indicated in the figures by the arrow I and in the rest of the document it is called direction I for the sake of simplicity.

The surface of the wall 11 directed towards the cavity 13 is parallel to the direction I, the surface of the wall 12 directed towards the cavity 13 can be parallel to the direction I or can be inclined with respect to it by a determined angle β. The surfaces of the two walls 11 and 12 directed towards the outside of the cavity 13 can have any geometric shape that allows the first component 10 of the system to be mounted on the first element P.

The holes 16, respectively made in the walls 11 and 12 of the first component 10, serve to fix the first component 10 to the first element P. The fastening operation can be performed through the use of screws, nails, hooks or similar means.

The second component 20, in the embodiment shown in the figure, is in the shape of a T, but it can be in any shape suited to allow the second component 20 to simultaneously slide inside the first component 10 and be mounted on the second element S. The short arm of the T (in the figure, the horizontal arm of the second component 20) comprises a terminal portion 21 suited to be housed inside the first component 10. The terminal portion 21 comprises a second rolling surface 21a. The second rolling surface is the surface of the terminal portion 21 directed towards the long arm of the T 25 (in the figure, the vertical arm of the second component 20).

The second rolling surface 21a houses rolling means 22 and holding means 24 suited to hold the rolling means 22. The rolling means 22 may comprise one or more balls, cylinders or similar elements. The rolling means 22 may comprise any suitable material, for example plastic, metal, ferromagnetic material or paramagnetic material, a combination of the same or similar materials. The holding means 24 are suited to hold the rolling means 22 in position on the rolling surface 21a when the system is in the configuration of disconnection. As can be better observed with reference to Figures from 3A to 3E, the holding means 24 can also be suited to exert a return force on the rolling means 22 during the different connection steps required by the system. The holding means 24 may comprise one or more springs or similar elements and, in the case where the holding means comprise metals or ferromagnetic or paramagnetic materials, they may comprise one or more magnetic elements.

The second rolling surface 21a is such that the distance between the second rolling surface 21a and the first rolling surface 12a, in the configuration of connection of the system (see the description of Figure 3E), decreases along the direction I. In the embodiment shown in the figure, the surface 21a is inclined by a predetermined angle α, larger than the angle β, with respect to the direction I. In this way, when the system is in the position of connection, the first connection surface 12a and the second connection surface 21a form a cavity 40. The cavity can be clearly seen in Figure 3E.

The long arm 25 of the T of the second component 20 is suited to allow the second component 20 to be mounted on the second element S. The second component 20 can be fixed to the second element S through suitable means like, for example, nails, hooks, glue or similar means.

Figures from 3A to 3E schematically show, in succession, some steps of the process of connection of the connection and/or fastening system that is the subject of the present invention.

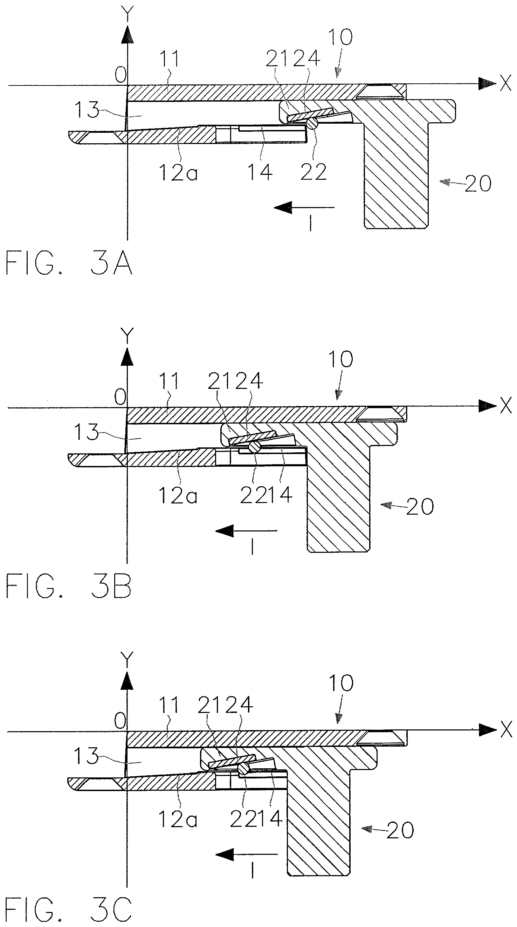

Figure 3A schematically shows the connection system shown in Figure 2, during a step of the translation of the terminal portion 21 of the second component 20 towards the first component 10, which leads to the configuration of connection of the system.

In this figure the terminal portion 21 of the second component 20 is partially inserted in the cavity 13 of the first component 10. The rolling means 22 are still outside the first component 10.

The second component 20 is inserted in the first component 10 on the side where this includes the guide 14.

Figure 3B schematically shows the connection system shown in Figure 2 during a further step of the translation of the second component of the system towards the first component of the system, which leads to the configuration of connection of the same.

In this figure the terminal portion 21 of the second component 20 is further inserted in the cavity 13 of the first component 10. Also the rolling means 22 are inside the cavity 13. In the figure, the rolling means 22 are inside the guide 14, on the rolling surface 12a on which they start to roll counterclockwise due to the friction force. The guide 14 has a complementary shape with respect to that of the rolling means 22. In this way, the guide 14 ensures a correct insertion of the terminal portion 21 of the second component 20 inside the cavity 13 of the first component 10. The fact that at this stage the rolling means 22 start rolling may cause a shifting movement of the same with respect to the holding means 24. More particularly, the case may occur in which the rolling means 22 remain slightly backwards, in the direction I, with respect to the holding means 24. These, however, exert a return force on the rolling means 22 and do not allow the latter to become completely detached from them.

Figure 3C schematically shows the connection system shown in Figure 2, during a further step of the translation of the second component of the system towards the first component of the system, which leads to the configuration of connection of the same.

In this figure, the terminal portion 21 of the second component 20 is further inserted in the cavity 13 of the first component 10. In this figure, the rolling means 22 meet a step corresponding to an end of the guide 14, opposite the end of the guide 14 at the level of which the second component 20 of the system is inserted in the cavity 13 and, thrust by the movement of the second component 20 in the direction I and attracted by the holding means 24, move past said step.

Figure 3D schematically shows the connection system shown in Figure 2, during a further step of the translation of the second component of the system towards the first component of the system, which leads to the configuration of connection of the same.

In this figure, the terminal portion 21 of the second component 20 is further inserted in the cavity 13 of the first component 10. In this figure, the rolling means 22, as they roll anticlockwise and are attracted by the holding means 24, are in such a position along the first rolling surface 12a, that they have just moved past the safety means 15. In the embodiment of the invention shown herein, the safety means comprise a step. Said step prevents the rolling means 22, should they become accidentally detached from the holding means 24, from rolling towards the end of the first component 10 where the second component 20 of the system is inserted in the cavity 13, thus preventing the accidental opening of the system.

The panel on the right in Figure 3D shows an enlarged detail of the system. The panel shows, in fact, the rolling means 22 and the step 15 on the first rolling surface 12a.

Figure 3E schematically shows the connection system shown in Figure 2, in the configuration of connection.

In this figure, the terminal portion 21 of the second component 20 is completely inserted in the cavity 13 of the first component 10.

The assembly means 25 (the long arm of the T) of the second component of the system come into contact with the wall 12 of the first component 10, causing the system to stop.

In the configuration of connection, the first rolling surface 12a and the second rolling surface 21a form a cavity 40 inside which the rolling means 22 can theoretically move. The rolling means 22, however, in the configuration of connection of the system, are attracted by the holding means 24 towards the narrowest portion of the cavity 40 and, if no external force intervenes, they remain still in said position. In this way, if an attempt is made to arrange the system in the configuration of disconnection, applying a force to the second component 20 in the direction opposite the direction I causes the rolling means 22 to rotate clockwise, which pushes them further towards the narrow portion of the cavity 40. In this way, any attempt to arrange the system in the configuration of disconnection is automatically stopped. The system is thus in a stable position of connection.

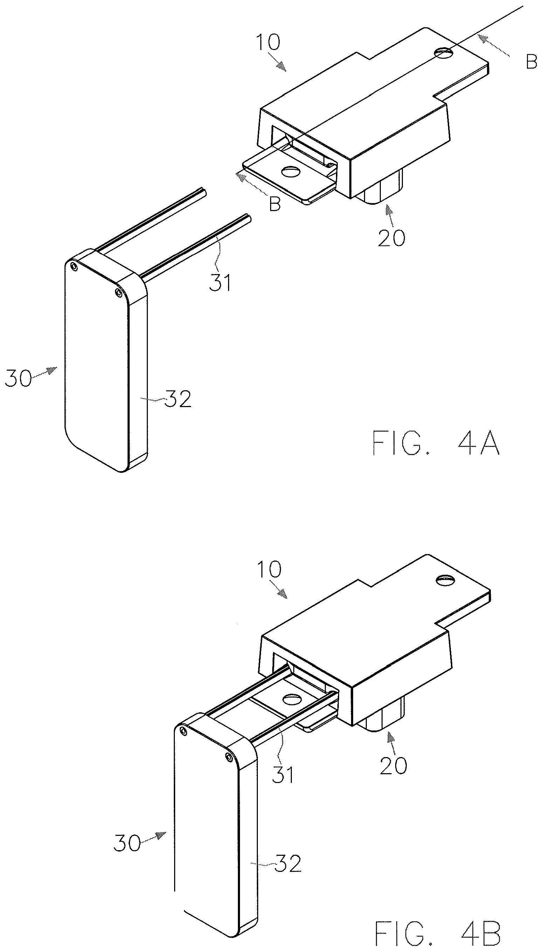

Figure 4A schematically shows a 3D view of the connection system according to an embodiment of the present invention, in which a release means 30 of the system is shown in the condition in which it is not used.

The release means 30 comprises a plate 32 to which two elongated elements 31 are fixed so that they are parallel to each other. The elongated elements 31, in the embodiment shown in the figure, comprise two rods whose profile is compatible with the grooves 17 of the first component 10 of the system. The elongated elements 31 and the plate 32 may comprise any suitable material, for example metal, plastic, wood, a combination of the same or similar materials.

It should furthermore be noted that, for the release means to be able to properly serve their function, it is preferable that the elongated elements 31 are inserted in the grooves 17, before the first component 20 is pulled in the direction opposite the direction I, so that the system can be released. In fact, in the case where the first component 20 of the system were pulled in the direction opposite direction I before the elongated elements 31 are inserted in the grooves 17, the rolling means 22 would rest on or be very near to the safety means 15. Consequently, the elongated elements 31 could not thrust the rolling means 22 any longer, since they would no more have sufficient space to move past the safety means 15.

Figure 4B schematically shows a 3D view of the connection system shown in Figure 4A during a step of use of the release means. The elongated elements 31 of the release means 30, in fact, are partially inserted in the grooves 17 included in the first component 10 of the system.

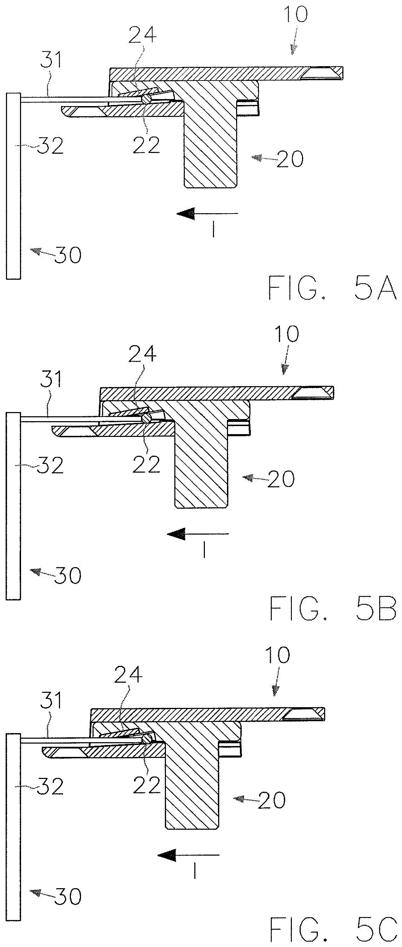

Figure 5A schematically shows the connection system shown in Figure 4A, in a sectional view along the direction BB indicated in Figures 4A and 4B, during a step of use of the release means.

The elongated elements 31 of the release means 30 are partially inserted in the grooves 17 of the first connection means 10. The end of the elongated elements 31, not connected with the plate 32, is in contact with the rolling means 22, but does not exert any force on them.

Figure 5B schematically shows the connection system shown in Figure 5A, in a further step of use of the release means.

The elongated elements 31 of the release means 30 are inserted further in the grooves 17 of the first connection means 10. The end of the elongated elements 31, not connected with the plate 32, is in contact with the rolling means 22 and thrusts them in the direction opposite the direction I. The rolling means 22 thus move towards the amplest part of the cavity 40, thrust by the action of the elongated elements 31 of the release means 30. The rolling means 22 can be thrust by the release means 30 until they move past the safety means 15 on the first rolling surface 12a.

Figure 5C schematically shows the connection system shown in Figure 5A, in a further step of use of the release means.

The elongated elements 31 of the release means 30 are completely inserted in the grooves 17 of the first connection means 10.

The end of the elongated elements 31, not connected with the plate 32, is in contact with the rolling means 22, and thrusts them in the opposite direction with respect to direction I. At this point, the rolling means 22 are in the amplest part of the cavity 40. In this way, if an attempt is made to arrange the system in the configuration of disconnection by applying a force in the direction opposite direction I to the second component 20, the rolling means 22 cannot stop the system, which can be easily arranged in the configuration of disconnection.

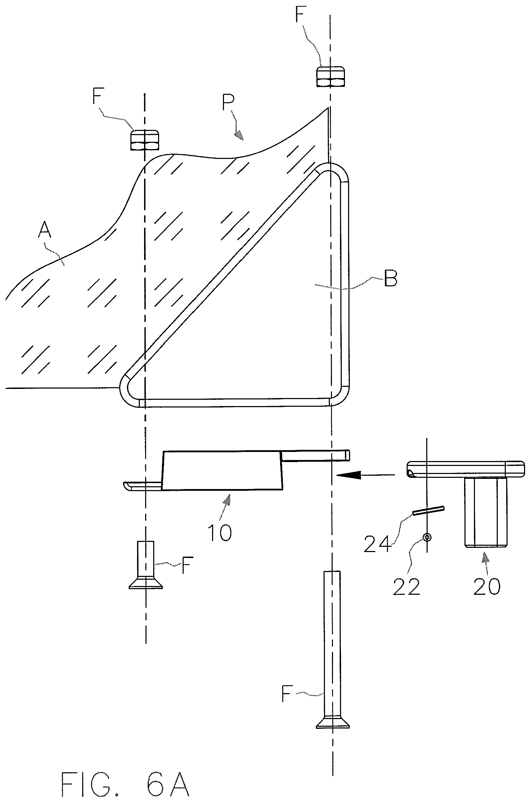

Figure 6A schematically shows a connection system according to a further embodiment of the present invention, seen along the direction AA defined in Figure 1 and during a step of assembly on an element to be connected.

More particularly, Figure 6A schematically shows how the first component 10 of the system can be mounted on and fixed to the first element P by using suitable fastening means.

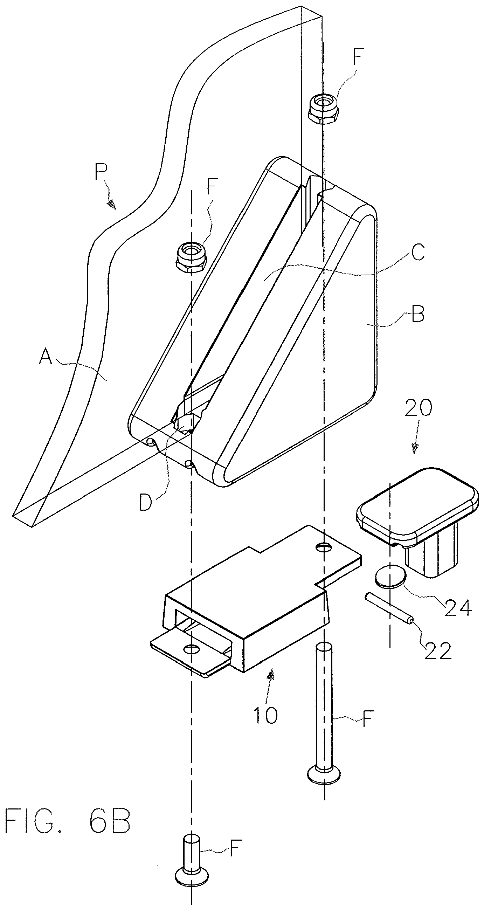

In the figure, the first element P is a door leaf, for example of a fridge, a refrigerated cabinet for supermarkets or any other piece of furniture. The door leaf P shown in the figure comprises two elements: a panel A and supporting means B. The panel A of the door leaf P can be a simple panel in a single block or a panel with double glazing of the type known to the expert in the art. The material with which the panel A is made can be any material suitable for the intended use of the door. The panel A may comprise, for example, glass, plastic, metal, wood, a combination of the same or similar materials. The supporting means B, in the embodiment shown herein, are triangular in shape. The supporting means B can, however, be in any suitable shape, for example rectangular or square. The supporting means B comprise a slit C (visible in Figure 6B) in which it is possible to house and/or fix an end of the panel A. The panel A can be fixed to the supporting means B using screws, nails, hooks, glue, a combination of the same or similar elements. The supporting means B also comprise openings D suited to accommodate suitable fastening means F for fastening the supporting means B to the first component 10 of the connection and/or fastening system. The fastening means F may comprise screws, nails, hooks, a combination of the same or similar elements. The fastening means F are such that they can be completely inserted in the holes 16 of the first component 10 and in the openings D of the first element P in such a way as to securely fix the first component 10 to the first element P.

Figure 6B schematically shows a 3D view of the connection system shown in Figure 6A.

The figure clearly shows the slit C of the supporting means B, in which the panel A of the first element P can be housed and/or fixed.

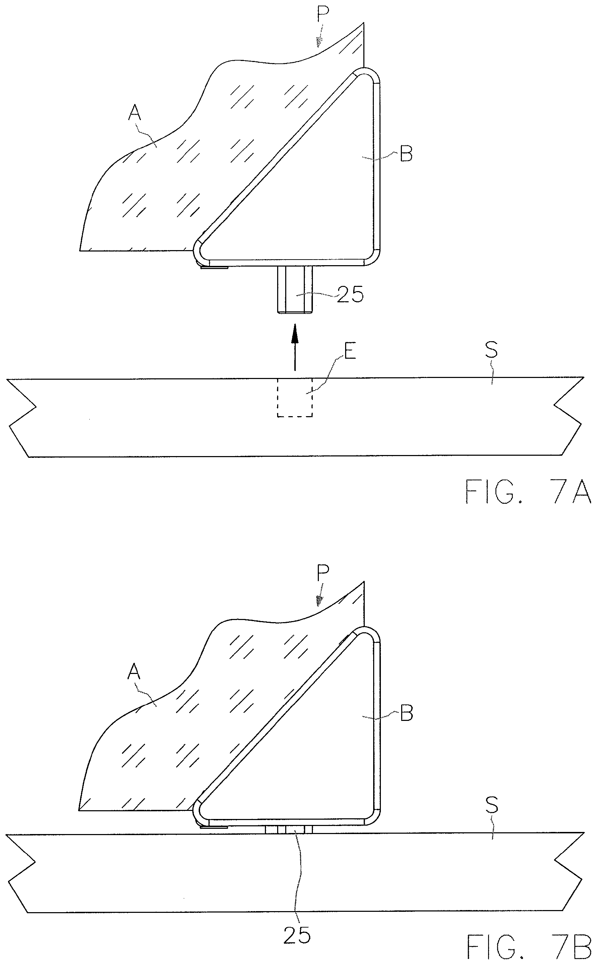

Figure 7A schematically shows a connection system according to a further embodiment of the present invention, seen along the direction AA defined in Figure 1 and during a step of assembly on an element to be connected.

More particularly, the figure shows the connection and/or fastening system in which the first component 10 of the system is mounted on the first element P, the system is in the configuration of connection and the assembly means 25 of the second component are being assembled on the second element S.

In the figure, the first element P is a door leaf, for example of a fridge, a refrigerated cabinet for supermarkets or any other piece of furniture, and the second element S is the door frame. The second element S, as shown in the figure, comprises a recess E that is suited to house inside it the assembly means 25 of the second component 20 of the system. Considering that in the example shown in the figure the first element P and the second element S are, respectively, a door leaf and the corresponding door frame, the assembly means 25 are inserted in the recess E and are free to rotate inside it, in such a way as to allow the door leaf to be opened and closed. In this case, the recess E may comprise means, like for example suitable bearings, suited to facilitate the rotation of the assembly means 25 inside it. In the case where the elements P and S to be connected respectively are, for example, the shelf of a shelving system and the upright of the same, the assembly means 25 of the second component 20 can be securely fixed to the second element S through suitable means, like for example hooks, glue or similar means.

Figure 7B schematically shows the connection system shown in Figure 7A, mounted on both of the elements to be connected.

More particularly, the figure shows the connection and/or fastening system in which the first component 10 of the system is mounted on the first element P, the system is in the configuration of connection and the assembly means 25 of the second component 20 are mounted on the second element S.

Even though the present invention has been described with reference to the embodiments illustrated above, it is clear for the expert in the art that several modifications, variants and improvements of the present invention can be carried out in the light of the explanations provided above and within the scope of the attached claims, without departing from the subject of the invention and from the scope of protection provided by the same.

Finally, the fields of application that are considered known to the experts in the art have not been described herein, in order to avoid uselessly putting the illustrated invention in the shade.

Consequently, the invention is not limited to the embodiments described above, but is only limited by the scope of protection defined by the attached claims.

## Claims

1. Quick connection and/or fastening system suited to arrange a first element (P) and a second element (S) in a first connection configuration and in a second disconnection configuration;
said system comprising a first component (10) and a second component (20) suited to be mounted respectively on said first element and on said second element (P, S), said first and said second component (10, 20) being also suited to be arranged in a first connection configuration and in a second disconnection configuration, in such a way as to alternatively allow the mutual connection and disconnection of said first and of said second element (P, S);
said first component (10) being suited to accommodate a terminal portion (21) of said second component (20) so as to allow its translation inside it;
said system comprising rolling means (22), said first component (10) comprising a first rolling surface (12a) for said rolling means (22) and said terminal portion (21) of said second component (20) comprising a second rolling surface (21a) for said rolling means (22);
said rolling means (22) being suited to counteract the translation of said terminal portion (21) of said second component (20) towards the disconnection configuration of said system and suited to be set rotating in a first direction of rotation by the translation of said terminal portion (21) of said second component (20) in order to reach the connection configuration of said system, and suited to be set rotating in a second direction of rotation, contrary to the first direction of rotation, by the translation of said terminal portion (21) of said second component (20) in order to reach the disconnection configuration of said system,
said system being **characterized in that**
said second rolling surface (21a) is configured in such a way that, in the connection configuration, the distance between said second rolling surface (21a) and said first rolling surface (12a) increases along the translation direction of said terminal portion (21) that leads to the disconnection configuration of said system, and **in that**
said second component (20) comprises said rolling means (22).

2. Quick connection and/or fastening system according to claim 1, **characterized in that** said second rolling surface (21a) is inclined with respect to the translation direction of said terminal portion (21) inside said first component (10).

3. Quick connection and/or fastening system according to any of the preceding claims, **characterized in that** said rolling means (22) comprise a metallic, ferromagnetic or paramagnetic material.

4. Quick connection and/or fastening system according to any of the preceding claims, **characterized in that** it comprises holding means (24) suited to exert an attraction force on said rolling means (22).

5. Quick connection and/or fastening system according to claim 4, **characterized in that** in the disconnection configuration of said system said holding means (24) support said rolling means (20).

6. Quick connection and/or fastening system according to claim 4 or 5, **characterized in that** said holding means (24) comprise one or more magnetic elements.

7. Quick connection and/or fastening system according to claim 4 or 5, **characterized in that** said holding means (24) comprise one or more elastic elements, for example springs.

8. Quick connection and/or fastening system according to any of the preceding claims, **characterized in that** said rolling means (22) comprise one or more balls, one or more cylinders or similar elements.

9. Quick connection and/or fastening system according to any of the preceding claims, **characterized in that** said first rolling surface (12a) of said first component (10) comprises safety means (15) suited to prevent the accidental disconnection of said system.

10. Quick connection and/or fastening system according to claim 9, **characterized in that** said safety means (15) comprise a step on said first rolling surface (12a).

11. Quick connection and/or fastening system according to any of the preceding claims, **characterized in that** it further comprises a release element (30) suited to be used to bring said system from the connection configuration to the disconnection configuration.

12. Quick connection and/or fastening system according to any of the preceding claims, **characterized in that** said first component (10) comprises one or more grooves (17) suited to house an element (30) suited to release the system, so that the insertion of said release element (30) in said one or more grooves (17) brings said system from the connection configuration to the disconnection configuration.

13. Quick connection and/or fastening system according to claim 11 or 12, **characterized in that** said release element comprises elongated elements (31) suited to be introduced in said grooves (17) made in said first component (10), so as to push said rolling elements (22) in the direction opposite the translation direction of said terminal portion (21) that leads to the connection configuration of said system.

14. Door comprising a first element (P), for example a door leaf, a second element (S), for example a frame, and a quick connection and/or fastening system according to any of the preceding claims, **wherein** said first component (10) is mounted on said first element (P) and said second component (20) is mounted on said second element (S).

15. Refrigerator comprising a door according to claim 14.

## Patentansprüche

1. Schnellverbindungs- und/oder Befestigungssystem, dazu geeignet, ein erstes Element (P) und ein zweites Element (S) in einer ersten Verbindungskonfiguration und in einer zweiten Trennungskonfiguration anzuordnen;
wobei das besagte System eine erste Komponente (10) und eine zweite Komponente (20) umfasst, die geeignet sind, jeweils an dem besagten ersten Element und an dem besagten zweiten Element (P, S) montiert zu werden, wobei die besagte erste und die besagte zweite Komponente (10, 20) des Weiteren dazu geeignet sind, in einer ersten Verbindungskonfiguration und in einer zweiten Trennungskonfiguration angeordnet zu werden, derart, dass sie alternativ die wechselseitige Verbindung und Trennung des besagten ersten und des besagten zweiten Elements (P, S) erlauben;
wobei die besagte erste Komponente (10) dazu geeignet ist, einen Endabschnitt (21) der besagten zweiten Komponente (20) aufzunehmen, um seine Verschiebung in ihrem Inneren zu erlauben;
wobei das besagte System Rollmittel (22) umfasst, wobei die besagte erste Komponente (10) eine erste Lauffläche (12a) für die besagten Rollmittel (22) umfasst und der besagte Endabschnitt (21) der besagten zweiten Komponente (20) eine zweite Lauffläche (21a) für die besagten Rollmittel (22) umfasst;
wobei die besagten Rollmittel (22) dazu geeignet sind, der Verschiebung des besagten Endabschnitts (21) der besagten zweiten Komponente (20) zu der Trennungskonfiguration des besagten Systems entgegenzuwirken und dazu geeignet sind, durch die Verschiebung des besagten Endabschnitts (21) der besagten zweiten Komponente (20) in einer ersten Drehrichtung in Drehung versetzt zu werden, um die Verbindungskonfiguration des besagten Systems zu erreichen, und dazu geeignet sind, durch die Verschiebung des besagten Endabschnitts (21) der besagten zweiten Komponente (20) in einer zweiten, der ersten Drehrichtung entgegengesetzten Drehrichtung in Drehung versetzt zu werden, um die Trennungskonfiguration des besagten Systems zu erreichen,
wobei das besagte System **dadurch gekennzeichnet ist, dass**
die besagte zweite Lauffläche (21a) so konfiguriert ist, dass in der Verbindungskonfiguration der Abstand zwischen der besagten zweiten Lauffläche (21a) und der besagten ersten Lauffläche (12a) entlang der zu der Trennungskonfiguration des besagten Systems führenden Verschieberichtung des besagten Endabschnitts (21) zunimmt, und dadurch,
dass die besagte zweite Komponente (20) die besagten Rollmittel (22) umfasst.

2. Schnellverbindungs- und/oder Befestigungssystem nach Patentanspruch 1, **dadurch gekennzeichnet, dass** die besagte zweite Lauffläche (21a) bezüglich der Verschieberichtung des besagten Endabschnitts (21) innerhalb der besagten ersten Komponente (10) geneigt ist.

3. Schnellverbindungs- und/oder Befestigungssystem nach einem jeden der vorstehenden Patentansprüche, **dadurch gekennzeichnet, dass** die besagten Rollmittel (22) ein metallisches, ferromagnetisches oder paramagnetisches Material umfassen.

4. Schnellverbindungs- und/oder Befestigungssystem nach einem jeden der vorstehenden Patentansprüche, **dadurch gekennzeichnet, dass** es Haltemittel (24) umfasst, die dazu geeignet sind, eine Anziehungskraft auf die besagten Rollmittel (22) auszuüben.

5. Schnellverbindungs- und/oder Befestigungssystem nach Patentanspruch 4, **dadurch gekennzeichnet, dass** die besagten Haltemittel (24) in der Trennungskonfiguration des besagten Systems die besagten Rollmittel (20) tragen.

6. Schnellverbindungs- und/oder Befestigungssystem nach Patentanspruch 4 oder 5, **dadurch gekennzeichnet, dass** die besagten Haltemittel (24) ein oder mehrere magnetische(s) Element(e) umfassen.

7. Schnellverbindungs- und/oder Befestigungssystem nach Patentanspruch 4 oder 5, **dadurch gekennzeichnet, dass** die besagten Haltemittel (24) ein oder mehrere elastische(s) Element(e) umfassen, beispielsweise Federn.

8. Schnellverbindungs- und/oder Befestigungssystem nach einem jeden der vorstehenden Patentansprüche, **dadurch gekennzeichnet, dass** die besagten Rollmittel (22) eine oder mehrere Kugel(n), einen oder mehrere Zylinder oder ähnliche Elemente umfassen.

9. Schnellverbindungs- und/oder Befestigungssystem nach einem jeden der vorstehenden Patentansprüche, **dadurch gekennzeichnet, dass** die besagte erste Lauffläche (12a) der besagten ersten Komponente (10) Sicherheitsmittel (15) umfasst, die dazu geeignet sind, die versehentliche Trennung des besagten Systems zu verhindern.

10. Schnellverbindungs- und/oder Befestigungssystem nach Patentanspruch 9, **dadurch gekennzeichnet, dass** die besagten Sicherheitsmittel (15) eine Stufe auf der besagten ersten Lauffläche (12a) umfassen.

11. Schnellverbindungs- und/oder Befestigungssystem nach einem jeden der vorstehenden Patentansprüche, **dadurch gekennzeichnet, dass** es des Weiteren ein Lösungselement (30) umfasst, das geeignet sind, dazu verwendet zu werden, das besagte System aus der Verbindungskonfiguration in die Trennungskonfiguration zu bringen.

12. Schnellverbindungs- und/oder Befestigungssystem nach einem jeden der vorstehenden Patentansprüche, **dadurch gekennzeichnet, dass** die besagte erste Komponente (10) eine oder mehrere Rille(n) (17) umfasst, die dazu geeignet ist/sind, ein Element (30) aufzunehmen, das dazu geeignet ist, das System zu lösen, so dass die Einfügung des besagten Lösungselements (30) in die besagte(n) eine oder mehreren Rille(n) (17) das besagte System aus der Verbindungskonfiguration in die Trennungskonfiguration bringt.

13. Schnellverbindungs- und/oder Befestigungssystem nach Patentanspruch 11 oder 12, **dadurch gekennzeichnet, dass** das besagte Lösungselement längliche Elemente (31) umfasst, die dazu geeignet sind, in die besagten Rillen (17) in der besagten ersten Komponente (10) eingefügt zu werden, um die besagten Rollelemente (22) in die der zu der Verbindungskonfiguration des besagten Systems führenden Verschieberichtung des besagten Endabschnitts (21) entgegengesetzte Richtung zu schieben.

14. Tür, ein erstes Element (P), zum Beispiel einen Türflügel, ein zweites Element (S), zum Beispiel einen Rahmen, und ein Schnellverbindungs- und/oder Befestigungssystem nach einem jeden der vorstehenden Patentansprüche umfassend, **wobei** die besagte erste Komponente (10) an dem besagten ersten Element (P) montiert ist und die besagte zweite Komponente (20) an dem besagten zweiten Element (S) montiert ist.

15. Kühlschrank, eine Tür nach Patentanspruch 14 umfassend.

## Revendications

1. Système de raccordement et/ou de fixation rapide apte à disposer un premier élément (P) et un deuxième élément (S) dans une première configuration de branchement et dans une deuxième configuration de débranchement ;
ledit système comprenant un premier composant (10) et un deuxième composant (20) indiqués pour être montés respectivement sur ledit premier élément et sur ledit deuxième élément (P, S), ledit premier et ledit deuxième composants (10, 20) étant aussi indiqués pour être disposés dans une première configuration de branchement et dans une deuxième configuration de débranchement de manière à permettre alternativement le branchement et le débranchement réciproque dudit premier élément et dudit deuxième élément (P, S);
ledit premier composant (10) étant apte à loger une portion d'extrémité (21) dudit deuxième composant (20) de manière à permettre la translation à son intérieur ;
ledit système comprenant des moyens de roulement (22), ledit premier composant (10) comprenant une première surface de roulement (12a) pour lesdits moyens de roulement (22) et ladite portion d'extrémité (21) dudit deuxième composant (20) comprenant une deuxième surface de roulement (21a) pour lesdits moyens de roulement (22) ;
lesdits moyens de roulement (22) étant aptes à s'opposer à la translation de ladite portion d'extrémité (21) dudit deuxième composant (20) vers la configuration de débranchement dudit système et aptes à être mis en rotation dans une première direction de rotation grâce à la translation de ladite portion d'extrémité (21) dudit deuxième composant (20) pour atteindre la configuration de branchement dudit système, et aptes à être mis en rotation dans une deuxième direction de rotation, contraire à la première direction de rotation, grâce à la translation de ladite portion d'extrémité (21) dudit deuxième composant (20) pour atteindre la configuration de débranchement dudit système,
ledit système étant **caractérisé en ce que**
ladite deuxième surface de roulement (21a) est configurée de manière à ce que, dans la configuration de branchement, la distance entre ladite deuxième surface de roulement (21a) et ladite première surface de roulement (12a) augmente le long de la direction de translation de ladite portion d'extrémité (21) qui entraîne la configuration de débranchement dudit système, et **en ce que**
ledit deuxième composant (20) comprend lesdits moyens de roulement (22).

2. Système de raccordement et/ou de fixation rapide, selon la revendication 1, **caractérisé en ce que** ladite deuxième surface de roulement (21a) est inclinée par rapport à la direction de translation de ladite portion d'extrémité (21) à l'intérieur dudit premier composant (10).

3. Système de raccordement et/ou de fixation rapide, selon l'une quelconque des revendications précédentes, **caractérisé en ce que** lesdits moyens de roulement (22) comprennent un matériau métallique, ferromagnétique ou paramagnétique.

4. Système de raccordement et/ou de fixation rapide, selon l'une quelconque des revendications précédentes, **caractérisé en ce que** il comprend des moyens de retenue (24) aptes à exercer une force d'attraction sur lesdits moyens de roulement (22).

5. Système de raccordement et/ou de fixation rapide, selon la revendication 4, **caractérisé en ce que** dans la configuration de débranchement dudit système lesdits moyens de retenue (24) soutiennent lesdits moyens de roulement (20).

6. Système de raccordement et/ou de fixation rapide, selon la revendication 4 ou 5, **caractérisé en ce que** lesdits moyens de retenue (24) comprennent un ou plusieurs éléments magnétiques.

7. Système de raccordement et/ou de fixation rapide, selon la revendication 4 ou 5, **caractérisé en ce que** lesdits moyens de retenue (24) comprennent un ou plusieurs éléments élastiques, par exemple des ressorts.

8. Système de raccordement et/ou de fixation rapide, selon l'une quelconque des revendications précédentes, **caractérisé en ce que** lesdits moyens de roulement (22) comprennent une ou plusieurs sphères, un ou plusieurs cylindres ou éléments similaires.

9. Système de raccordement et/ou de fixation rapide, selon l'une des revendications précédentes, **caractérisé en ce que** ladite première surface de roulement (12a) dudit premier composant (10) comprend des moyens de sécurité (15) aptes à empêcher le débranchement accidentel dudit système.

10. Système de raccordement et/ou de fixation rapide, selon la revendication 9, **caractérisé en ce que** lesdits moyens de sécurité (15) comprennent une marche dans ladite première surface de roulement (12a).

11. Système de raccordement et/ou de fixation rapide, selon l'une quelconque des revendications précédentes, **caractérisé en ce qu'**il comprend également un élément de déblocage (30) apte à être utilisé pour amener ledit système de la configuration de branchement à la configuration de débranchement.

12. Système de raccordement et/ou de fixation rapide, selon l'une quelconque des revendications précédentes, **caractérisé en ce que** ledit premier composant (10) comprend une ou plusieurs rainures (17) aptes à loger un élément de déblocage (30) du système, de manière à ce qu'en introduisant ledit élément de déblocage (30) dans lesdites une ou plusieurs rainures (17) on amène ledit système de la configuration de branchement à la configuration de débranchement.

13. Système de raccordement et/ou de fixation rapide, selon la revendication 11 ou 12, **caractérisé en ce que** ledit élément de déblocage comprend des éléments allongés (31) aptes à être insérés dans lesdites rainures (17) réalisées dans ledit premier composant (10), de manière à pousser lesdits éléments de roulement (22) dans la direction opposée à la direction de translation de ladite portion d'extrémité (21) qui entraîne la configuration de branchement dudit système.

14. Porte comprenant un premier élément (P), par exemple un volet de porte, un deuxième élément (S), par exemple un châssis, et un système de raccordement et/ou fixation rapide selon l'une quelconque des revendications précédentes, **où** ledit premier composant (10) est monté sur ledit premier élément (P) et ledit deuxième composant (20) est monté sur ledit deuxième élément (S).

15. Réfrigérateur comprenant une porte selon la revendication 14.
